# EUROPEAN PATENT SPECIFICATION

(11) **EP 1 626 912 B1**
(45) Date of publication and mention of the grant of the patent: **05.01.2011**
(21) Application number: 04729558.9
(22) Date of filing: 26.04.2004
(51) Int. Cl.: B65D 75/58

(54) **METHOD FOR MANUFACTURING A VACUUM PACKAGE, FILLED WITH FOR INSTANCE COFFEE**
VERFAHREN ZUR HERSTELLUNG EINER VAKUUM-VERPACKUNG FÜR ZUM BEISPIEL KAFFEE
PROCEDE DE FABRICATION, A L'AIDE D'UN FILM, D'UN EMBALLAGE QUI PEUT ETRE MIS SOUS VIDE AU MOINS LORSQUE L'EMBALLAGE EST REMPLI D'ARTICLES DE CONSOMMATION TEL QUE DU CAFE INSTANTANE

(30) Priority: 25.04.2003 NL 1023264
(43) Date of publication of application: 22.02.2006
(73) Proprietor: Sara Lee/DE N.V., 3532 AA Utrecht (NL)
(72) Inventor: FLAMAND, John, Henri, NL-8602 DA Sneek (NL)
(74) Representative: Winckels, Johannes Hubertus F.
(86) International application number: PCT/NL2004/000277
(87) International publication number: WO 2004/096659

(56) References cited:
- EP-A- 0 363 693
- EP-A- 0 733 561
- EP-A- 1 197 439
- WO-A-01/94098
- WO-A-92/16439
- WO-A-03/010067
- GB-A- 425 106
- US-A- 3 944 127
- US-A- 4 109 822
- US-A- 4 124 965
- US-A- 5 083 675

## Description

The invention relates to a method for manufacturing, with the aid of a film, a package which is vacuumizable at least when the package is filled with consumer items such as, for instance, coffee.

Such a method is known per se.

In the forties, GB 466003 disclosed, for instance, a method for vacuum packing coffee in a package manufactured from a material substantially impermeable to air. The material is flexible and, optionally, of plastic. The coffee is placed in the package such that after evacuating and sealing off the package, the material of the package can resist the atmospheric pressure exerted on the outside of the package. The material of the package known from this document is so thin that it can simply be torn open by hand. A drawback thereof is that uncontrolled tearing can take place and that then, coffee can fall from a package torn open too far. EP 0363693 discloses a package with a weakened line, enabling tearing off a corner or edge.

The term "consumer items" can, for that matter, be understood to include many sorts of goods and/or industrial goods usable by the consumer. Here, goods suitable for consumption can be concerned. Consumer goods can be considered here which are available in powder-form or as an amount of granules, such as, for instance, coffee or cattle feed. Here, typically, goods are concerned which can be stored longer in a vacuum or in an environment in which the pressure is lower than the atmospheric pressure. Also, in this context, goods which are not suitable for consumption but which are preferably packaged in vacuum are understood to form part of consumer goods. For instance, glue granules can be considered which dehydrate when stored for a long time in an environment with an excess of oxygen. Also, in this context, items which can be preserved longer in, preferably, a preserving gas at subatmospheric pressure, fall under the term "consumer items". number of products to be used separately but preferably sold in multiplicity can be considered. The amount of consumer items to be packaged should be slightly compacted, as is the case with, for instance, powders and granules.

Often, and certainly with consumer items such as coffee, it is of importance that the package is not opened before it is opened for the purpose of consumption. The preservability and/or the quality guarantee in terms of, for instance, flavour and aroma of such consumer items is typically coupled to whether or not the consumer items can be packaged in vacuum. After opening the vacuum package, the consumer items are to be consumed relatively rapidly. Therefore, it is of importance that a vacuum package does not leak before the package is opened purposefully.

Nowadays, a side of the material that will serve as inside of the package is often manufactured from polyethylene. When sealing off the package after evacuation, a sealing seam is formed by interconnecting the insides through melting. Here, the polyethylene functions as a hot-melt. Such a sealing offers sufficient guarantee that the package will not start leaking along the seam. Often, a package manufactured with the aid of such a material cannot simply be torn open by hand. Neither can the package simply be opened along such a seam.

Opening such a package often requires the use of a knife, a pair of scissors or a different tool suitable that end. This forms a problem in the sense that a user has to have such a tool at hand. Further, when using this tool in a clumsy manner, one can hurt oneself and/or the packaged can be opened in an unfavourable manner thereby losing a part of the content of the package or damaging it.

An object of the invention is to provide a method with which a package can be manufactured which meets at least one of the above-mentioned problems.

This object is achieved with a method according to the characterizing part of appended claim 1.

This offers the advantage that a user, wanting to open the package without using tools, can tear the package open along the line formed as film weakening. With this, also, there is less risk of the content of the package becoming damaged. Further, this offers the possibility to provide the film weakening formed as a line in the film thus that, when the package manufactured with the film is being torn open, there is less risk of at least a part of the content falling from the package.

In the following, for such a line also the term "line of weakening" will be used.

Heretofore, it was assumed that providing a line of weakening in a film for manufacturing a package which is vacuumizable at least when the package is filled with consumer items such as, for instance, coffee, leads to air leaking into the package. In other words, contrary to the prejudice, the inventor realized that this needs not be the case and that a line of weakening can be provided in a vacuum package without this affecting the action of the vacuum package.

The film weakening designed as a line locally reduces the tear strength of the film and hence simplifies opening the package. The invention also stems from the surprising insight that the tear strength plays no part in the evacuation of the package when the package is filled with consumer items. In other words, the line of weakening does not hinder the evacuation. Without wishing to be bound to any theory, this appears to be the result of the fact that although, when evacuated, the film of the package deforms, it is not or hardly stretch-loaded or tension-loaded.

Providing the film weakening can, for that matter, take place such that, locally, the nature of the film is changed such that, locally, the film is less strong when a tensile load is applied. However, it is also possible that in situ, the amount of film material is reduced and that on the basis thereof, a weakening of the film is realized. Having a film weakening which has the form of a line closed in itself offers the advantage that, upon opening of the package, the part of the film located within the line closed in itself can be completely removed and will not be a hindrance when the content of the package is taken from the package.

In a special embodiment of a method according to the invention it holds that the method comprises:
- providing in the film at least one recess which extends from a first surface of the film through only a part of the film in the direction of a second surface of the film.

As the recesses are designed to be blind, no air can leak in when the package is being evacuated. The recesses can be disposed such that the recesses are continuously next to each other and, thus, form one elongated recess. However, it is also possible that each recess is provided as one separate recess. In that case, for the purpose of obtaining a line, such separate recesses will be located in one line.

Further, it holds in particular that the film comprises at least two layers with mutually different properties. This offers the possibility to make use of those properties when providing the line of weakening, which can simplify and accelerate the provision of the film weakening enormously.

In particular it holds that the film weakening is provided with the aid of a laser. This offers the advantage that the accuracy and the speed with which the line of weakening is provided can be great. The fact is that the lateral accuracy of a laser beam is great; the energy of the laser light can be accurately set; and the speed of a laser can be high in processing technology.

Further, it preferably holds that, under the influence of an amount of light emanating from the laser, at least a part of a first layer of the at least two layers substantially weakens or is removed and that under the influence of the amount of light emanating from the laser, a second layer of the at least two layers of the film remains substantially intact. It is possible, for instance, that the laser is set such that material is removed from the first layer by the laser. A recess is then formed in the first layer. Under the influence of the laser, the second layer remains intact. In other words, the recess formed extends from a surface of the first layer located on the outside of the film as far as the second layer.

Preferably, the film weakening is provided in the film on a side forming an outside of the package. This offers the advantage that the line of weakening will be well visible. The fact is that the line of weakening, in particular when it comprises one or several recesses, will effect a disturbance of the light reflection thereby forming a contrast with a part of the film which is free of recesses. Further, this entails that the inside of the package will be free of recesses and that, for instance, no coffee powder can end up therein which, when the package is disposed of, will be thrown away unused.

In particular it holds, that providing in the film a film weakening formed substantially as a line takes place when the film is discharged from a roller or is supplied to a roller. This entails that, compared to the current method, the method according to the invention needs not cause a deceleration of the method. After the film has been manufactured and prior to cutting out the parts intended for the package, in many cases, the film is wound up at least once. This can be done at great speed. Upon discharge from and/or supply to a roller, the provision of the line of weakening can be carried out at such a speed that the winding or unwinding speed needs hardly, if at all, be adjusted for the provision of the line of weakening. In particular when use is made of a laser for providing the line of weakening, providing the line of weakening needs not entail additional time for the method. Therefore, the line of weakening can be provided in a very inexpensive manner. Further, providing the lines of weakening needs not entail separate modification of already known methods for manufacturing such packages. The laser equipment can be placed on a suitable location above, below or next to the film.

Preferably, the method comprises enclosing in a cover at least parts of the film which are folded when the package is in a final form.. Such a cover can be provided with text which cannot simply or inexpensively be provided on the film. Further, it is possible in a relatively inexpensive manner to make the package suitable for different products and/or for different countries. The fact is that the film can be brought into the final form irrespective of the consumer items to be included in the package and/or irrespective of the text of which it is desired that the user, using the consumer items, can read the text in the language of the country where consumption of the consumer items takes place.

It is possible that with the aid of glue, a connection between the cover and the foil can be realized. This can be done in a very inexpensive manner.

For a special embodiment it holds, that the method also comprises enclosing the film weakening with a sealable frame. This offers the advantage that after the package is opened, the opening can be sealed off again.

Preferably, the method comprises effecting an at least virtually air-tight connection between the framework and the film. As a result, in the end product hardly any exchange of air is possible between the opened package and an environment outside the package and outside the framework. This is favorable to the shelf life of the consumer items included in the package after the package has been opened.

Further, it can hold that the method comprises:
- providing a film weakening such that when the package is opened, a dispensing outlet is formed.

With a dispensing outlet, it becomes easier for a user of the end product to dose and aim the consumer items when the consumer items are to exit the package. Further, no tool such as a spoon is required.

The invention also relates to a package manufactured from a film which is vacuumizable at least when the package is filled with consumer items such as, for instance, coffee, as defined in claim 19.

The invention is presently elucidated with reference to a drawing whereby figures 1-9 do not show all characterizing features of the invention. In the drawing:
Fig. 1 schematically shows an embodiment of a method according to the invention;
Fig. 2 schematically shows a cross section of a film of a package with a film weakening provided therein according to an embodiment of a method according to the invention;
Fig. 3 schematically shows a cross section of a film of a package with a film weakening provided therein according to a second embodiment of a method according to the invention;
Fig. 4 schematically shows a cross section of a film of a package with a film weakening provided therein according to a third embodiment of a method according to the invention;
Fig. 5 schematically shows a first embodiment of a package according to the invention;
Fig. 6 schematically shows a second embodiment of a package according to the invention;
Fig. 7 schematically shows a first possible cross section of the second embodiment of a package according to the invention;
Fig. 8 schematically shows a second possible cross section of the second embodiment of a package according to the invention;
Fig. 9 schematically shows a third possible cross section of the second embodiment of a package according to the invention;
Fig. 10 shows a third embodiment of a package according to the invention;
Fig. 11 shows a first phase in opening the embodiment shown in Fig. 10; and
Fig. 12 shows a second phase in opening the embodiment shown in Fig. 10.

Identical parts are provided with identical reference marks.

A method for manufacturing, with the aid of a film, a package with is vacuumizable at least when the package is filled with consumer items such as, for instance, coffee is known per se. In such a method known per se, often, first the film is unwound and cut to size to thereupon be folded around a folding block. Various seams, such as, for instance, along the bottom, are sealed close so that, eventually, a box-shaped intermediate product is formed. This box-shaped intermediate product is filled with the consumer items, such as, in this example, coffee. A setting process enables the coffee to be slightly compacted. Then, the intermediate product with the set coffee therein is placed in a vacuum chamber and the package is sealed close.

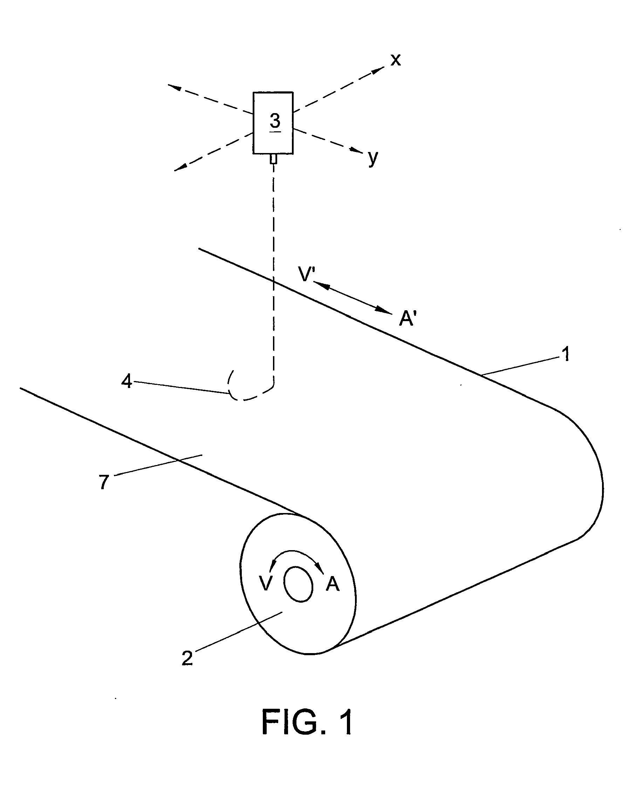

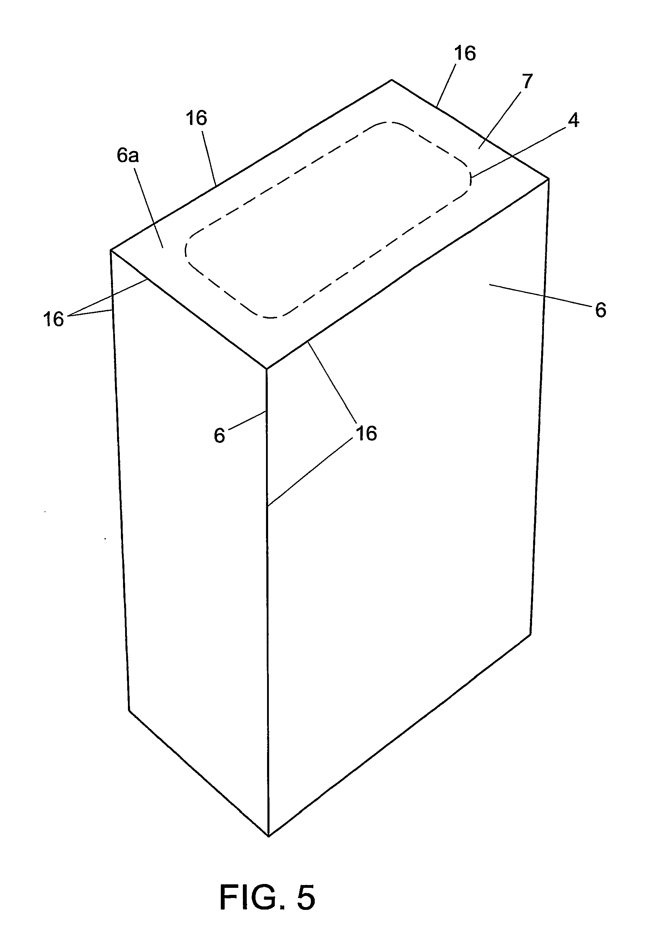

According to the invention, the method also comprises providing in the film a film weakening formed substantially as a line. An example thereof is shown in Fig. 1. The film 1 is discharged from a roller 2. The roller rotates in the direction of arrow V and the film moves in the direction of arrow V'. In the example, it is shown how, when the film 1 moves, for instance with the aid of a laser 3, a film weakening 4 is provided in the film 1. The laser 3 can comprise, for instance, a CO₋₂ laser. The film weakening 4 can be provided such that the film weakening 4 has the form of a line closed in itself. To this end, the laser can for instance be connected to an X/Y stage. The laser beam can trace a pattern on the film 1 moving in the direction of the arrow V' such that a desired form of the film weakening 4 formed substantially as line is obtained in the film 1. After a predetermined displacement of the film 1 in the direction of arrow V', a following film weakening can be provided with the aid of the laser 3. Thereupon, based on a predetermined length measurement, the film 1 is cut into equal parts. Each of these parts can comprise part surfaces, each of which will form a side of the package to be formed. The film weakening can be located entirely in a part surface which, after folding, sealing of bottom and longitudinal edges, filling, setting and sealing of top seams, forms the top surface. In that case, the package is manufactured such that the package is free of overlap between a package seam and the film weakening 4. Fig. 5 shows an example of an end product of such a method. In this case, the end product is a package 6 in which a film weakening 4 has been provided in the film 1 on a side 7 which, after manufacture of the package 6, forms an outside 7 of the package 6. The film weakening is located in a top surface 6a.

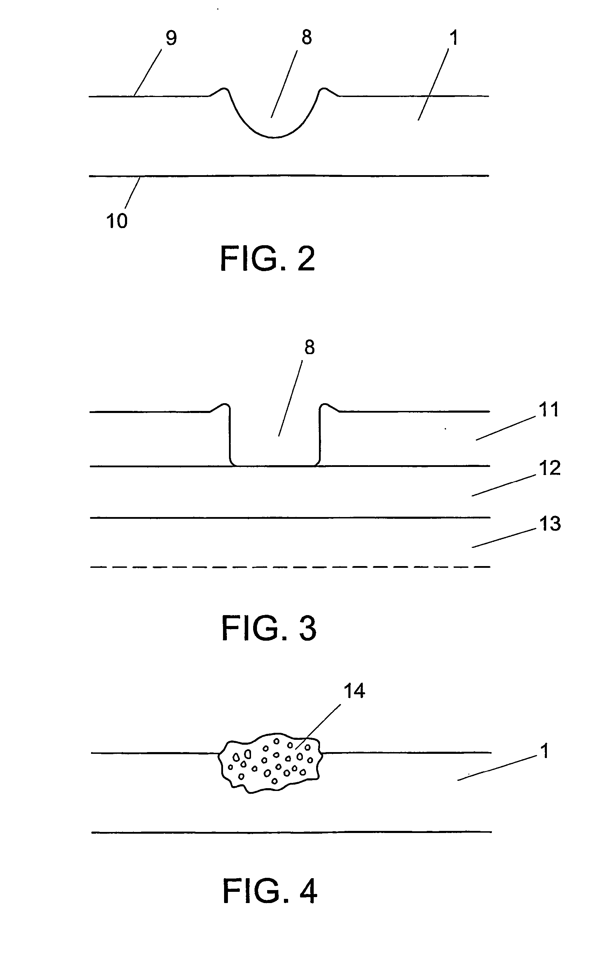

Figs. 2 - 4 each schematically show a cross section of a film 1 in which a film weakening 4 has been provided. Fig. 2 shows a film 1 resulting from an embodiment of a method according to the invention, wherein in the film 1 a recess 8 is provided. The recess 8 extends from a first surface 9 of the film 1 through only one part of the film in the direction of a second surface 10 of the film.

In Fig. 3, an example is shown of a film 1 provided with at least two layers 11, 12 with mutually different properties. Thus, under the influence of an amount of light emanating from the laser, at least a part of the first layer 11 can substantially be removed. The second layer 12 can be such that, under the influence of an amount of light emanating from the laser, the second layer 12 remains substantially intact. It is possible, for instance, that the second layer 12 allows the laser light to pass. The first layer 11 can, for instance, absorb the laser light as a result of which at least a part of the first layer 11 evaporates or disappears by means of laser ablation, thereby providing a recess 8 in the first layer 11. Layer 12 can comprise, for instance, polyethylene, as polyethylene is typically designed to be light-permeable and is highly suitable to seal the package as a hot melt. The first layer can be designed in, for instance, polyester, as polyester can be designed so as to be laser light absorbing. Naturally, it is also possible that the film as shown in Fig. 3 comprises a further layer 13. With such a film it can be such that the first layer 11 can be removed by the laser, the second layer 12 reflects the laser light and the third layer 13 is suitable for sealing the film 1. When the film comprises at least three layers, the second layer 12 or the third layer 13 can for instance comprise a layer of aluminum. It is also possible that such a layer comprises polyethylene vinyl alcohol. Such layers are laser light reflecting. According to a manner known per se, the wave length of the laser can be adjusted to the properties of the layers the film 1 is provided with.

In Fig. 4, further, a film 1 is shown in which the film weakening 4 does not provide a recess but a change in the nature of the film material. For instance, through the action of laser light, a part 14 of the film can, for instance, be made more porous and, hence, weaker. Naturally, in this case, it is of importance that the energy of the laser, the time duration the laser beam acts on a position of the film and the properties of at least the outermost layer of the film are adjusted to each other such that the weakening is limited to a part of the material located adjacent only one side of the film. Other weakening techniques too can be used here. For instance, local etching or providing grooves can be considered.

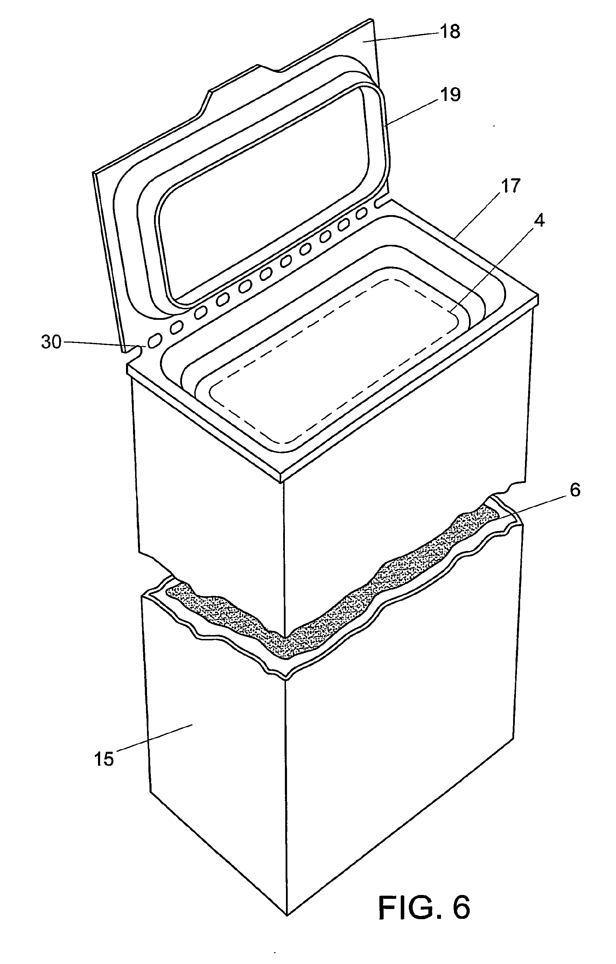

Further, it is possible that at least parts of the film 1, which are folded when the package 6 is in a final form, are enclosed in a cover 15. An example hereof is shown in Fig. 6. Further, it is possible that the method comprises enclosing the film weakening 4 with a sealable framework 17. The package shown in Fig. 6 is provided with such a framework. In use, with such an end product, the vacuum package can be opened with the aid of the film weakening 4. After taking an amount of consumer items from a package 6, a package can be sealed off virtually air-tightly with the aid of a cover 18 the framework is provided with, so that in any case no exposure to an unlimited supply of air is possible.

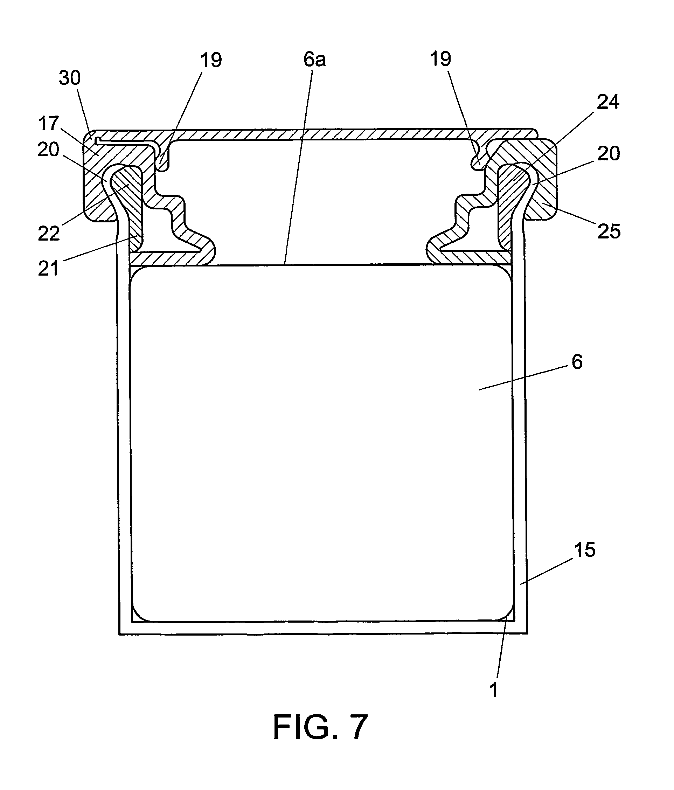

Fig. 7 shows a cross section of such a package. By means of a hinge 30, a cover 18 is connected to the framework 1. The framework and the cover can be integrally connected to each other. In that case, the hinge 30 is designed as, for instance, a local reduction. In these Figures, the cover 18 seals off the framework 17. Preferably, to that end, the cover is provided with, for instance, a rubber ring 19. With the aid of a clamping action, the framework 17 is connected to the cover. The method which has lead to this end product comprises the following steps: 1) providing a film weakening in the film; 2) manufacturing, with the aid of the film, an evacuated package 6 filled with consumer items, the top surface 6a of which being provided with the film weakening; 3) enclosing the package 6 with a cover 15; and 4) connecting the film weakening to a framework 17 by providing a relatively rigid clamping ring 22 on the inside 21 of an opening edge 20 of the cover 15 and placing the framework 17 on an outside 23 around the opening edge 20. The parts 24 and 25 of the clamping ring 22 and the framework 17, respectively, clamp around each other. Between the parts 24 and 25, the opening edge of the cover is clampingly received. In this case, the film 1 can be connected to the cover 15 with the aid of glue. In this case, preferably, the cover 15 is manufactured from a material virtually impermeable to air.

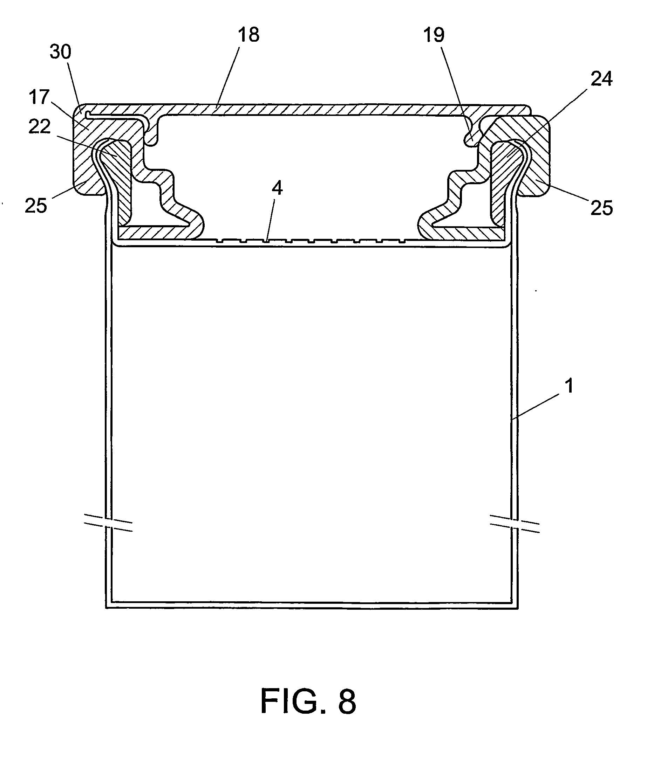

Fig. 8 shows a cross section of a package 6 that can be the end product of an alternative embodiment of a method according to the invention. In this case, the film 1 is folded such that adjacent the film weakening 4 the film 1 itself can be connected to the framework 17 with the aid of a clamping connection. Optionally, a further cover can be provided around the package.

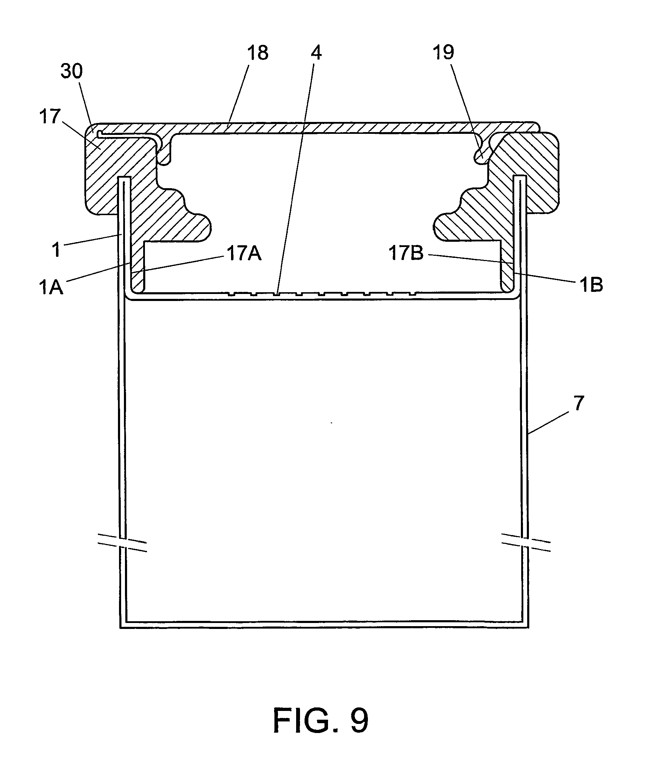

Figure 9 shows a cross section of an end product manufactured according to a further embodiment of the method according to the invention. In this variant, the film 1 is folded such that the parts 1a and 1b can be glued against parts 17a and 17b for obtaining a connection between the framework 17 and the film 1. Naturally, around the film 1, still, a cover 15 can be provided.

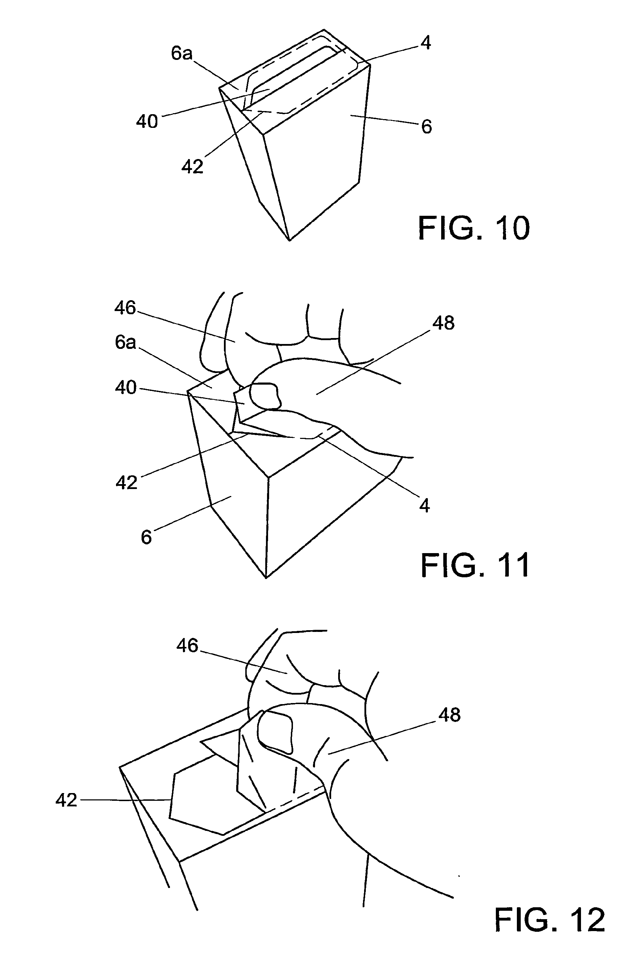

Preferably, the film weakening is provided such that when opening the package a dispensing outlet is formed. Figure 10 shows a package made according to such a method. The package is provided with a lip 40 extending over at least a part of the top surface and which can serve as a pulling member for opening the package 6. Such a lip 40 can be formed in a manner known per se when sealing the package. Naturally, when cutting the film to size, the desired forming of such a lip should be taken into account. The fact is that the lip can be formed by designing the film used for manufacturing the package with an oversize. The oversized parts are sealed against each other for forming the lip during sealing of the package. The lip 40 can coincide at least partly with a closing seam of the package. However, it is also possible to fold a part of the film over and to seal the insides of the folded parts against each other. The lip 40 can also extend over other surfaces of the package or continue beyond the upper surface 6a. The line of weakening 4 is also located in the upper surface 6a of the package shown in Figure 10. The line of weakening substantially comprises a V-shaped part 42 so that after breaking the line of weakening, the dispensing outlet is formed. Preferably, a point of engagement of the lip is located adjacent or through the point 44 where the legs of the part 42, formed as a V, of the line of weakening 4 come together. Preferably, the point of engagement is located on a part of the line which is removed when opening the package. As the film weakening 4 forms a line closed in itself, the lip will be connected to the part of the package located within the line closed in itself. When the lip extends beyond the film weakening line, at the location of the weakening line, often, a groove will be provided so that the lip tears and forms no hindrance for opening the package.

In Figure 11, it is visible how a user, whose index finger 46 and thumb 48 have been depicted, by gripping the pulling member formed as lip 40, can break the film along the line of weakening for the purpose of opening the package. The V-shaped part 42 of the opening then forms a dispensing outlet of the package. It will be clear that it is also possible to engage the lip at a different position for opening the package. In that case, the outlet will primarily be formed adjacent the point of engagement of located elsewhere. It will also be clear that a dispensing outlet needs not necessarily have a V-shape. The dispensing outlet can for instance also have a more rounded shape. It is also possible that a lip, also serving as connecting seam of the package, intersects the line of weakening although this is not necessarily the case.

The invention is not limited to be exemplary embodiments shown. For instance, the direction of movement in the film 1 in Figure 1 can also be the reverse, towards arrow A'. A part of the package located within the line of weakening closed in itself can also be provided with a pulling member provided with the aid of a strong line with which that part can be torn from the package. The package can, for that matter, be manufactured from various suitable materials. Further, it is possible that the laser does not trace a pattern but, with the aid of a mask, depicts a pattern on the film for applying the line of weakening with the pattern of the depiction. Although it is preferred that the film weakening is provided in the film before the film is cut to size, is folded etc, it is excluded that the film weakening is provided in the film: when it has already been used for manufacturing the package, when the package has already been filled with consumer items, when the package has already been evacuated, and when the package has already been sealed. This holds for all methods and for all embodiments of the package shown.

Such variants are all understood to belong to the invention.

## Claims

1. A method for manufacturing, with the aid of a film (1), a package (6) which is vacuumizable at least when the package is filled with consumer items such as, for instance, coffee, **characterized in that** the method comprises:
• providing in the film a film weakening (4) formed substantially as a line closed in itself;
• providing the package with a lip (40) extending over at least a part of a top surface and which can serve as a pulling member for opening the package, wherein the lip is connected to a part of the package located within the line closed in itself.

2. A method according to claim 1, **characterized in that** the method comprises:
• providing at least one recess (8) in the film (1) which recess extends from a first surface (9) of the film through only a part of the film in the direction of a second surface (10) of the film.

3. A method according to any one of the preceding claims, **characterized in that** the film (1) comprises at least two layers (11, 12) with mutually different properties.

4. A method according to any one of the preceding claims, **characterized in that** the film weakening (4) is provided with the aid of a laser (3).

5. A method according to claims 3 and 4, **characterized in that**, under the influence of an amount of light emanating from the laser (3), at least a part of a first layer (11) of the at least two layers substantially weakens or is removed and that, under the influence of an amount of light emanating from the laser, a second layer (12) of the at least two layers of the film (1) remains substantially intact.

6. A method according to claim 4 or 5, **characterized in that** the laser (3) comprises a CO₂ laser.

7. A method according to any one of the preceding claims, **characterized in that** the film weakening (4) is provided in the film (1) on a side which, after manufacturing the package (6), forms an outside (7) of the package.

8. A method according to any one of the preceding claims, **characterized in that** providing in the film (1) a film weakening (4) formed substantially as a line takes place when the film is discharged from a roller (2) or supplied to a roller.

9. A method according to any one of the preceding claims, **characterized in that** the method comprises:
• manufacturing the package (6) such that the package is free of an overlap between a packaging seam and the film weakening (4).

10. A method according to any one of the preceding claims, **characterized in that** the method comprises:
• enclosing in a cover (15) at least parts of the film (1) which are folded when the package (6) is in a final form.

11. A, method according to claim 10, **characterized in that** the method comprises:
• effecting, with the aid of glue, a connection between the cover (15) and the film (1).

12. A method according to any one of the preceding claims, **characterized in that** the method comprises:
• enclosing the film weakening (4) with a sealable framework (17).

13. A method according to claim 12, **characterized in that** the method comprises:
• effecting an at least virtually airtight connection between the framework (17) and the film (1).

14. A method according to any one of preceding claims 10 - 13, **characterized in that** the method comprises:
• providing glue between the framework (17) and the film (1) and/or the cover (15).

15. A method according to any one of claims 10-14, **characterized in that** the method comprises:
• connecting the film (1) and/or the cover (15) to the framework (17) with the aid of a clamping connection.

16. A method according to any one of the preceding claims, **characterized in that** the method comprises:
• providing the film weakening (4) such that when the package (6) is opened, a dispensing outlet (42) is formed.

17. A method according to any one of the preceding claims, **characterized in that** the method comprises:
• including consumer items in the package (6).

18. A method according to claim 17, **characterized in that** the method comprises:
• including coffee in the package (6) which may or may not be ground.

19. A package (6) which is manufactured from a film (1) and which is vacuumizable at least when the package is filled with consumer items such as, for instance, coffee, **characterized in that** the package is provided with a film weakening (4) formed substantially as a line closed in itself, wherein the package is provided with a lip (40) extending over at least a part of a top surface and which can serve as a pulling member for opening the package, wherein the lip is connected to a part of the package located within the line closed in itself.

20. A package (6) according to claim 19, **characterized in that** the film weakening (4) is provided with at least one recess (8) extending from a first surface (9) of the film through only a part of the film in their direction of a second surface (10) of the film.

21. A package (6) according to claim 19 or 20, **characterized in that** the film (1) comprises at least two layers (11, 12) with mutually different properties.

22. A package (6) according to any one of claims 19 - 21, **characterized in that** the film weakening (4) is provided with the aid of the laser (3).

23. A package (6) according to claims 21 and 22, **characterized in that**, under the influence of an amount of light emanating from the laser (3), at least a part of the first layer (11) of the at least two layers substantially weakens or is removed and that, under the influence of the amount of light emanating from the laser, a second layer (12) of the at least two layers of the film remains substantially intact.

24. A package (6) according to any one of claims 19 - 23, **characterized in that** the film weakening (4) is provided in the film (1) on a side forming an outside (7) of the package.

25. A package (6) according to any one of claims 19 - 24, **characterized in that** the package is free of an overlap between a packaging seam and the film weakening (4).

26. A package (6) according to any one of claims 19 - 25, **characterized in that** the package is provided with a cover (15).

27. A package (6) according to 26, **characterized in that** the cover (15) and the film (1) are attached to each other with the aid of glue.

28. A package (6) according to any one of claims 19 - 27, **characterized in that** the package is provided with a sealable framework (17) enclosing the film weakening (4).

29. A package (6) according to claim 28, **characterized in that** the package is provided with a virtually airtight connection between the film (1) and the framework (17).

30. A package (6) according to any one of claims 26 - 29, **characterized in that** the framework (17) is connected to the film (1) and/or the cover (15) with the aid of glue.

31. A package (6) according to any one of claims 28 - 30, **characterized in that** the film (1) and/or the cover (15) is connected to the framework (17) with the aid of a clamping action.

32. A package (6) according to any one of claims 19 - 31, **characterized in that** the film weakening (4) is provided such that when the package is opened, a dispensing outlet (42) is formed.

33. A package (6) according to any one of claims 19 - 32, **characterized in that** consumer items are included in the package.

34. A package (6) according to claim 33, **characterized in that** the consumer items comprise coffee which may or may not be ground.

## Patentansprüche

1. Verfahren, um mittels eines Films (1) eine Packung (6) herzustellen, die mindestens, wenn die Packung mit Verbrauchsgütern wie z.B. Kaffee gefüllt ist, mit Vakuum beaufschlagbar ist, **dadurch gekennzeichnet, dass** das Verfahren umfasst:
Ausbilden eines Filmschwächungsbereichs (4) in dem Film, wobei der Filmschwächungsbereich im Wesentlichen als eine in sich selbst geschlossene Linie ausgebildet ist;
Versehen der Packung mit einer Lippe (40), die sich über mindestens einen Teil einer oberen Fläche erstreckt und die als ein Zugteil zum Öffnen der Packung dienen kann, wobei die Lippe mit einem innerhalb der in sich selbst geschlossenen Linie gelegenen Teil der Packung verbunden ist.

2. Verfahren nach Anspruch 1, **dadurch gekennzeichnet, dass** das Verfahren umfasst:
Ausbilden mindestens einer Ausnehmung (8) in dem Film (1), die von einer ersten Fläche (9) des Films durch nur einen Teil des Films in Richtung einer zweiten Fläche (10) des Films verläuft.

3. Verfahren nach einem der vorhergehenden Ansprüche, **dadurch gekennzeichnet, dass** der Film (1) mindestens zwei Schichten (11,12) mit voneinander unterschiedlichen Eigenschaften aufweist.

4. Verfahren nach einem der vorhergehenden Ansprüche, **dadurch gekennzeichnet, dass** der Filmschwächungsbereich (4) mit Hilfe eines Lasers (3) gebildet wird.

5. Verfahren nach Anspruch 3 und 4, **dadurch gekennzeichnet, dass** unter dem Einfluss einer von dem Laser (3) ausgegebenen Lichtmenge mindestens ein Teil einer ersten Schicht (11) der mindestens zwei Schichten im Wesentlichen geschwächt wird oder entfernt wird und dass unter dem Einfluss einer von dem Laser ausgegebenen Lichtmenge eine zweite Schicht (12) der mindestens zwei Schichten des Films (1) im Wesentlichen intakt bleibt.

6. Verfahren nach Anspruch 4 oder 5, **dadurch gekennzeichnet, dass** der Laser (3) einen CO₂-Laser aufweist.

7. Verfahren nach einem der vorhergehenden Ansprüche, **dadurch gekennzeichnet, dass** der Film-Schwächungsbereich (4) in dem Film (1) auf einer Seite ausgebildet wird, die nach dem Herstellen der Packung (6) eine Außenseite (7) der Packung bildet.

8. Verfahren nach einem der vorhergehenden Ansprüche, **dadurch gekennzeichnet, dass** das Ausbilden eines im Wesentlichen als Linie ausgelegten Film-Schwächungsbereichs (4) in dem Film (1) erfolgt, wenn der Film von einer Rolle (2) ausgegeben oder einer Rolle zugeführt wird.

9. Verfahren nach einem der vorhergehenden Ansprüche, **dadurch gekennzeichnet, dass** das Verfahren umfasst:
Herstellen der Packung (6) derart, dass die Packung frei von einer Überlappung zwischen einer Packungsnaht und dem Film-Schwächungsbereich (4) ist.

10. Verfahren nach einem der vorhergehenden Ansprüche, **dadurch gekennzeichnet, dass** das Verfahren umfasst:
Umschließen von mindestens Teilen des Films (1), die im Zustand der endgültigen Form der Packung (6) gefaltet sind, in einer Abdeckung (15).

11. Verfahren nach Anspruch 20, **dadurch gekennzeichnet, dass** das Verfahren umfasst:
Bilden einer Verbindung zwischen der Abdeckung (15) und dem Film (1) mittels eines Klebers.

12. Verfahren nach einem der vorhergehenden Ansprüche, **dadurch gekennzeichnet, dass** das Verfahren umfasst:
Umschließen des Film-Schwächungsbereichs (4) mit einer siegelbaren Rahmenstruktur (17).

13. Verfahren nach Anspruch 12, **dadurch gekennzeichnet, dass** das Verfahren umfasst:
Bilden einer mindestens im Wesentlichen luftdichten Verbindung zwischen der Rahmenstruktur (17) und dem Film (1).

14. Verfahren nach einem der vorhergehenden Ansprüche 10-13, **dadurch gekennzeichnet, dass** das Verfahren umfasst:
Applizieren von Kleber zwischen der Rahmenstruktur (17) und/oder der Abdeckung (15).

15. Verfahren nach einem der Ansprüche 10-14, **dadurch gekennzeichnet, dass** das Verfahren umfasst:
Verbinden des Films (1) und/oder der Abdeckung (15) an der Rahmenstruktur (17) mittels einer Klemmverbindung.

16. Verfahren nach einem der vorhergehenden Ansprüche, **dadurch gekennzeichnet, dass** das Verfahren umfasst:
Ausbilden des Film-Schwächungsbereichs (4) derart, dass beim Öffnen der Packung (6) ein Ausgabeauslass (42) gebildet wird.

17. Verfahren nach einem der vorhergehenden Ansprüche, **dadurch gekennzeichnet, dass** das Verfahren umfasst:
Platzieren von Verbrauchsgütern in der Packung (6).

18. Verfahren nach Anspruch 17, **dadurch gekennzeichnet, dass** das Verfahren umfasst:
Platzieren von gemahlenem oder ungernahlenem Kaffee in der Packung (6).

19. Packung (6), die aus einem Film (1) hergestellt ist und die mindestens, wenn die Packung mit Verbrauchsgütern wie z.B. Kaffee gefüllt ist, mit Vakuum beaufschlagbar ist, **dadurch gekennzeichnet, dass** die Packung mit einem Filmschwächungsbereich (4) versehen ist, der im Wesentlichen als eine in sich selbst geschlossene Linie ausgebildet ist, wobei die Packung mit einer Lippe (40) versehen ist, die sich über mindestens einen Teil einer oberen Fläche erstreckt und die als ein Zugteil zum Öffnen der Packung dienen kann, wobei die Lippe mit einem innerhalb der in sich selbst geschlossenen Linie gelegenen Teil der Packung verbunden ist.

20. Packung (6) nach Anspruch 19, **dadurch gekennzeichnet, dass** der Filmschwächungsbereich (4) mit mindestens einer Ausnehmung (8) versehen ist, die von einer ersten Fläche (9) des Films durch nur einen Teil des Films in Richtung einer zweiten Fläche (10) des Films verläuft.

21. Packung (6) nach Anspruch 19 oder 20, **dadurch gekennzeichnet, dass** der Film (1) mindestens zwei Schichten (11,12) mit voneinander unterschiedlichen Eigenschaften aufweist.

22. Packung (6) nach einem der Ansprüche 19-21, **dadurch gekennzeichnet, dass** der Filmschwächungsbereich (4) mit Hilfe eines Lasers (3) gebildet ist.

23. Packung (6) nach Anspruch 21 und 22, **dadurch gekennzeichnet, dass** unter dem Einfluss einer von dem Laser (3) ausgegebenen Lichtmenge mindestens ein Teil einer ersten Schicht (11) der mindestens zwei Schichten im Wesentlichen geschwächt wird oder entfernt wird und dass unter dem Einfluss der von dem Laser ausgegebenen Lichtmenge eine zweite Schicht (12) der mindestens zwei Schichten des Films im Wesentlichen intakt bleibt.

24. Packung (6) nach einem der Ansprüche 19-23, **dadurch gekennzeichnet, dass** der Film-Schwächungsbereich (4) in dem Film (1) auf einer Seite ausgebildet ist, die eine Außenseite (7) der Packung bildet.

25. Packung (6) nach einem der Ansprüche 19-24, **dadurch gekennzeichnet, dass** die Packung frei von einer Überlappung zwischen einer Packungsnaht und dem Film-Schwächungsbereich (4) ist.

26. Packung (6) nach einem der Ansprüche 19-25, **dadurch gekennzeichnet, dass** die Packung (6) mit einer Abdeckung (15) versehen ist.

27. Packung (6) nach Anspruch 26, **dadurch gekennzeichnet, dass** die Abdeckung (15) und der Film (1) mittels eines Klebers aneinander befestigt sind.

28. Packung (6) nach einem der Ansprüche 19-27, **dadurch gekennzeichnet, dass** die Packung mit einer siegelbaren Rahmenstruktur (17) versehen ist, die den Film-Schwächungsbereich (4) umschließt.

29. Packung (6) nach Anspruch 28, **dadurch gekennzeichnet, dass** die Packung mit einer im Wesentlichen luftdichten Verbindung zwischen dem Film (1) und der Rahmenstruktur (17) versehen ist.

30. Packung (6) nach einem der Ansprüche 26-29, **dadurch gekennzeichnet, dass** die Rahmenstruktur (17) mit dem Film (1) und/oder der Abdeckung (15) mittels eines Klebers verbunden ist.

31. Packung (6) nach einem der Ansprüche 28-30, **dadurch gekennzeichnet, dass** der Film (1) und/oder die Abdeckung (15) mittel einer Klemmverbindung an der Rahmenstruktur (17) befestigt sind.

32. Packung (6) nach einem der Ansprüche 19-31, **dadurch gekennzeichnet, dass** der Film-Schwächungsbereich (4) derart ausgebildet ist, dass beim Öffnen der Packung ein Ausgabeauslass (42) gebildet wird.

33. Packung (6) nach einem der Ansprüche 19-32, **dadurch gekennzeichnet, dass** Verbrauchsgüter in der Packung enthalten sind.

34. Packung (6) nach Anspruch 33, **dadurch gekennzeichnet, dass** die Verbrauchsgüter gemahlenen oder ungemahlenen Kaffee aufweisen.

## Revendications

1. Procédé de fabrication, à l'aide d'un film (1), d'un emballage (6) qui peut être mis sous vide au moins lorsque l'emballage est rempli d'articles de consommation tels que, par exemple, du café, **caractérisé en ce que** le procédé comprend :
• la fourniture, dans le film, d'un affaiblissement de film (4) formé sensiblement sous forme de ligne fermée sur elle-même ;
• la fourniture à l'emballage d'une lèvre (40), s'étendant sur au moins une partie d'une surface supérieure et pouvant servir d'organe de traction pour ouvrir l'emballage, dans lequel la lèvre est reliée à une partie de l'emballage située dans la zone définie par la ligne fermée sur elle-même,

2. Procédé selon la revendication 1, **caractérisé en ce que** le procédé comprend :
• la fourniture d'au moins une cavité (8) dans le film (1), ladite cavité s'étendant d'une première surface (9) du film, en passant par seulement une partie du film, dans la direction d'une deuxième surface (10) du film.

3. Procédé selon l'une quelconque des revendications précédentes, **caractérisé en ce que** le film (1) comprend au moins deux couches (11, 12) ayant des propriétés mutuellement différentes.

4. Procédé selon l'une quelconque des revendications précédentes, **caractérisé en ce que** l'affaiblissement de film (4) est produit à l'aide d'un laser (3).

5. Procédé selon les revendications 3 et 4, **caractérisé en ce que**, sous l'influence d'une quantité de lumière émanant du laser (3), au moins une partie d'une première couche (11) des au moins deux couches s'affaiblit sensiblement ou est enlevée, et, sous l'influence d'une quantité de lumière émanant du laser, une deuxième couche (12) des au moins deux couches du film (1) reste sensiblement intacte.

6. Procédé selon la revendication 4 ou 5, **caractérisé en ce que** le laser (3) comprend un laser au CO₂.

7. Procédé selon l'une quelconque des revendications précédentes, **caractérisé en ce que** l'affaiblissement de film (4) est produit dans le film (1) sur un côté qui, après fabrication de l'emballage (6), forme un côté extérieur (7) de l'emballage.

8. Procédé selon l'une quelconque des revendications précédentes, **caractérisé en ce que** le production, dans le film (1), d'un affaiblissement de film (4) conformé sensiblement en ligne se produit lorsque le film est déchargé d'un rouleau (2) ou fourni à un rouleau.

9. Procédé selon l'une quelconque des revendications précédentes, **caractérisé en ce que** le procédé comprend :
• la fabrication de l'emballage (6), de manière que l'emballage soit exempt de tout chevauchement entre un cordon de joint d'emballage et l'affaiblissement de film (4).

10. Procédé selon l'une quelconque des revendications précédentes, **caractérisé en ce que** le procédé comprend :
• l'enfermement dans un couvercle (15) d'au moins des parties du film (1) qui sont pliées lorsque l'emballage (6) se présente à sa forme finale.

11. Procédé selon la revendication 10, **caractérisé en ce que** le procédé comprend :
• la réalisation, à l'aide d'une colle, d'une connexion entre le couvercle (15) et le film (1).

12. Procédé selon l'une quelconque des revendications précédentes, **caractérisé en ce que** le procédé comprend :
• renfermement de l'affaiblissement de film (4) avec un cadre (17) pouvant être fermé de manière étanche.

13. Procédé selon la revendication 12, **caractérisé en ce que** le procédé comprend :
• la réalisation d'une connexion au moins virtuellement étanche à l'air entre le cadre (17) et le film (1).

14. Procédé selon l'une quelconque des revendications 10 à 13 précédentes, **caractérisé en ce que** le procédé comprend :
• la fourniture de colle entre le cadre (17) et le film (1) et/ou le couvercle (15).

15. Procédé selon l'une quelconque des revendications 10 à 14, **caractérisé en ce que** le procédé comprend :
• la connexion du film (1) et/ou du couvercle (15) au cadre (17), à l'aide d'une connexion par serrage.

16. Procédé selon l'une quelconque des revendications précédentes, **caractérisé en ce que** le procédé comprend :
• la réalisation de l'affaiblissement de film (4) de manière que, lorsque l'emballage (6) est ouvert, une sortie de distribution (42) soit formée.

17. Procédé selon l'une quelconque des revendications précédentes, **caractérisé en ce que** le procédé comprend :
• l'introduction d'articles de consommation dans l'emballage (6).

18. Procédé selon la revendication 17, **caractérisé en ce que** le procédé comprend :
• l'introduction, dans l'emballage (6), de café pouvant ou non être moulu.

19. Emballage (6), fabriqué à partir d'un film (1) et qui peut être mis sous vide au moins lorsque l'emballage est rempli d'articles de consommation tels que, par exemple, du café, **caractérisé en ce que** l'emballage est muni d'un affaiblissement de film (4) formé sensiblement sous forme de ligne fermée sur elle-même, dans lequel l'emballage est muni d'une lèvre (40), s'étendant sur au moins une partie d'une surface supérieure et pouvant servir d'organe de traction pour ouvrir l'emballage, dans lequel la lèvre est reliée à une partie de l'emballage située dans la zone définie par la ligne fermée sur elle-même.

20. Emballage (6) selon la revendication 19, **caractérisé en ce que** l'affaiblissement de film (4) est muni d'au moins une cavité (8) s'étendant d'une première surface (9) du film, en passant par seulement une partie du film, dans la direction d'une deuxième surface (10) du filin.

21. Emballage (6) selon la revendication 19 ou 20, **caractérisé en ce que** le film (1) comprend au moins deux couches (11, 12) ayant des propriétés mutuellement différentes.

22. Emballage (6) selon l'une quelconque des revendications 19 à 21, **caractérisé en ce que** l'affaiblissement de film (4) est produit à l'aide d'un laser (3).

23. Emballage (6) selon les revendications 21 et 22, **caractérisé en ce que**, sous l'influence d'une quantité de lumière émanant du laser (3), au moins une partie de la première couche (11) des au moins deux couches s'affaiblit sensiblement ou est enlevée, et, sous l'influence d'une quantité de lumière émanant du laser, une deuxième couche (12) des au moins deux couches du film reste sensiblement intacte.

24. Emballage (6) selon l'une quelconque des revendications 19 à 23, **caractérisé en ce que** l'affaiblissement de film (4) est produit dans le film (1) sur un côté formant un côté extérieur (7) de l'emballage.

25. Emballage (6) selon l'une quelconque des revendications 19 à 24, **caractérisé en ce que** l'emballage est exempt de tout chevauchement entre un cordon de joint d'emballage et l'affaiblissement de film (4).

26. Emballage (6) selon l'une quelconque des revendications 19 à 25, **caractérisé en ce que** l'emballage est muni d'un couvercle (15).

27. Emballage (6) selon la revendication 26, **caractérisé en ce que** le couvercle (15) et le film (1) sont attachés l'un à l'autre à l'aide de colle.

28. Emballage (6) selon l'une quelconque des revendications 19 à 27, **caractérisé en ce que** l'emballage est muni d'un cadre (17) susceptible d'être fermé de manière étanche, enclosant l'affaiblissement de film (4).

29. Emballage (6) selon la revendication 28, **caractérisé en ce que** l'emballage est muni d'une connexion au moins virtuellement étanche à l'air entre le film (1) et le cadre (17).

30. Emballage (6) selon l'une quelconque des revendications 26 à 29, **caractérisé en ce que** le cadre (17) est connecté au film (1) et/ou au couvercle (15) à l'aide de colle.

31. Emballage (6) selon l'une quelconque des revendications 28 à 30, **caractérisé en ce que** le film (1) et/ou le couvercle (15) est/ont connecté(s) au cadre (17) à l'aide d'une action de serrage.

32. Emballage (6) selon l'une quelconque des revendications 19 à 31, **caractérisé en ce que** l'affaiblissement de film (4) est réalisé de manière que, lorsque l'emballage est ouvert, une sortie de distribution (42) soit formée.

33. Emballage (6) selon l'une quelconque des revendications 19 à 32, **caractérisé en ce que** les articles de consommation sont inclus dans l'emballage.

34. Emballage (6) selon la revendication 33, **caractérisé en ce que** les articles de consommation comprennent du café, pouvant ou non être moulu.
